# EUROPEAN PATENT SPECIFICATION

(11) **EP 2 415 379 B1**
(45) Date of publication and mention of the grant of the patent: **24.07.2013**
(21) Application number: 10172166.0
(22) Date of filing: 06.08.2010
(51) Int. Cl.: A47L 9/00, F16B 5/06

(54) **A cleaning device**
Reinigungsvorrichtung
Dispositif de nettoyage

(43) Date of publication of application: 08.02.2012
(73) Proprietor: Nilfisk-Advance A/S, DK-2605 Brøndby (DK)
(72) Inventor: Fuglsang, Jens Jørgen, 8940 Randers (DK)
(74) Representative: Roerboel, Leif

(56) References cited:
- EP-A1- 0 437 024
- GB-A- 843 929
- JP-A- 11 056 697
- US-A- 2 060 168

## Description

The present invention pertains to a cleaning device, for example a domestic or professional cleaning device, such as a high-pressure washer or a vacuum cleaner, comprising a chassis and a cover.

### BACKGROUND OF THE INVENTION

Domestic cleaning devices, such as high-pressure washers (also referred to as high-pressure cleaners) and vacuum cleaners are traditionally manufactured from a chassis comprising a motor, electrical wiring and other mechanical equipment. A cover is traditionally fixed to the chassis in order to cover the motor, electrical wiring and mechanical equipment of the cleaning device. The wiring of such a cleaning device usually requires high voltage electricity. An inadvertent touching of the electrical components, wiring and the like may lead to electrical shock.

Thus, for safety reasons it is in most countries a requirement that the cover has to be fixed to the chassis in such a way that inadvertent access, by for example a playing child, to the motor and electrical wiring can be precluded.

The cover of a cleaning device is usually equipped with a plurality of apertures for control elements and a house that are operatively connected to the motor and other components that are mounted within or on the chassis. These apertures are thus usually adapted to match corresponding projections on the chassis or projecting elements of the other components mounted on the chassis that are to be connected to the control elements. This implies that the cover has to be aligned very precisely with the chassis when the cover is fixed to the chassis.

A common way of fixing a cover to a chassis of a cleaning device is to use a plurality of screws, which are fastened by using a screw driver. The chassis and cover are usually made of plastics, and the screws are traditionally selftapping when they are screwed into the holes in the chassis.

The use of a plurality of screws has the drawback that it is time-consuming to fix the cover to the chassis, which adds to the time and labour needed for manufacturing or assembling the cleaning device, and even more time-consuming to release the cover from the chassis when maintenance or repair of the cleaning device requires the cover to be moved from the chassis. Furthermore, the use of selftapping screws would imply that the cover can only be removed and fixed to the chassis a limited number of times before the threading in the chassis will be so damaged that it would not be possible to properly fix the cover to it anymore.

In US 2,060,168 is disclosed a vacuum cleaner having a first cover part and a second cover part adapted for at least in part covering electrical and mechanical equipment of the vacuum cleaner.

In GB 843 929 is disclosed system and means for detachably locking components to a support.

### SUMMARY OF THE INVENTION

It is an object to provide a cleaning device which is quickly to assemble and disassemble for maintenance and repairing purposes.

It is furthermore an object of the present invention to provide a locking element for a cleaning device, whereby it is possible to properly fix a cover to a chassis of it in a quickly and easy manner.

According to the present invention, a cleaning device comprises a first cover part and a second cover part. The two cover parts are adapted for at least in part covering electrical and mechanical equipment of the cleaning device when assembled together. The cleaning device also comprises a locking element being movable between a first unlocked position and a second locked position through a sliding motion relative to the first cover part and/or the second cover part. The locking element is being adapted for releasable locking engagement with once or more protrusions on the first cover part and/or the second cover part, when it is moved into the second locked position.

Hereby is achieved a cleaning device, where the first cover part can be easily fixed to the second cover part in a timesaving manner, simply placing the first cover part over the second cover part, and thereafter slidingly move the locking element from its unlocked to its locked position, whereby the locking element engages the one or more protrusions. It is contemplated that this way of assembling the cleaning device by moving a separate locking member is much less time-consuming than the traditional way of using a plurality of screws.

The locking element is adapted for releasable locking engagement with the protrusion. Thus, it is also possible to move the locking element from its second locked position and back to the first unlocked position, whereby the fixing of the first cover part to the second cover part is releasable. This is particularly important when maintenance and repairing of the cleaning device requires the first cover part and/or second cover part to be temporarily removed from the cleaning device. Since the movement of the separate locking member is a simpler and quicker operation than unwinding a plurality of screws, a cleaning device that Is much quicker to maintaln and repair is achieved.

The cleaning device is in a preferred embodiment a high-pressure washer or a vacuum clearier.

Preferably, the first cover part and/or the second cover part comprise one or more recesses or apertures adapted for mutually cooperating with the one or more protrusions. Hereby is achieved a simple and yet efficient way of providing an engagement between the locking element and the protrusion.

In a preferred embodiment of the invention, the first cover part or the second cover part comprises a chassis. For example a chassis could form an integral part of the first or second cover part. In another embodiment, the first or the second cover part could simply also function as a chassis. Here it is understood that by a chassis is meant a structure whereupon electrical and mechanical equipment could be mounted. In another embodiment, the chassis may comprise a separate frame structure whereupon the first and second cover parts could be mounted and interlocked to each other and the frame structure.

In yet another embodiment, the first and second cover parts could be assembled as described above and then mounted on a chassis.

Advantageously, the locking element may not be visible from outside the cleaning device when the first cover part has been fixed to the second cover part. Hereby the locking element will be protected from dirt and other kind of soiling when the cleaning device is being used. This is particularly important when the cleaning device is a high-pressure washer, wherein water and debris from the object to be cleaned may soil the high-pressure washer during use. Additionally, by placing the locking element in such a way that it will not be visible when the first cover part has been fixed to the second cover part, a cleaning device with a nicer and smoother appearance is achieved, which in turn will be easier to clean after use.

In a preferred embodiment, the locking element cooperates with the one or more protrusions in such a way that a snap locking is achieved when the locking element is moved from its first unlocked position to its second locked position.

The one or more protrusions may in one embodiment be substantially hook-shaped in order to provide a more thorough engagement between the locking element and the one or more protrusions when the locking element is moved from its first unlocked position to the second locked position.

The cleaning device may, according to an embodiment, further comprise packing means placed between the first cover part and the second cover part for providing an air- and/or waterproof seal. This is particularly advantageous in the embodiment, wherein the cleaning device is a vacuum cleaner, wherein a substantially airtight seal is needed In order to provide adequate suction.

In an advantageous embodiment, at least one of the one or more protrusions is placed on the first cover part, said protrusion(s) being adapted for cooperating with corresponding aperture(s) in the second cover part and the locking element.

In a preferred embodiment there is provided a plurality of protrusions that are placed on the first cover part. The plurality of protrusions is preferably forming an integrally moulded part of the first cover part. However, it should be understood that in an alternative embodiment of the invention, the plurality of protrusions could form an integral part of the second cover part.

In a preferred embodiment of the cleaning device, the first cover part or the second cover part or both the first and second cover parts may further comprise guiding means adapted for guiding the locking element when it is being moved from the first unlocked position to its second locked position. This gives a more reliable construction, wherein the guiding means ensures that the locking element is in the correct position for engagement of the protrusion(s).

As a safety precaution in the cleaning device, the locking element may be fixed in its second position by a fastener.

Preferably, the fastener comprises a threading, and preferably the fastener is adapted to cooperate with the locking element in such a way that it is movable from the first unlocked position to the second locked position by rotating the fastener in relation to its longitudinal axis. The fastener is in a preferred embodiment a screw which has a threading that is adapted to cooperate with corresponding threading in the locking element, so that the locking element will be moved from its first unlocked position to its second locked position by rotating the screw for example with the help of a screw driver. The locking element may also be moved from the second locked position to the first position by rotating the screw in the opposite direction in this way a very simple and elegant way of fastening the first cover part of a cleaning device to a second cover part is achieved.

Especially, In the embodiment wherein a plurality of protrusions on the first cover part and/or the second cover part are cooperating with corresponding notches and/or apertures in the locking element, the first cover part is fastened to the second cover part at a plurality of places using only one screw, instead of using one screw for each place.

In a preferred embodiment according to the invention, the cleaning device comprises two locking elements, one of them being placed along one side of it and the other along the other side of it, for example, along a part of the intersection between the first cover part and second cover part. This will improve the fastening of the first cover part to the second cover part.

Preferably, the first and/or second cover part comprises a plurality of apertures for control elements and/or a hose. These control elements are operatively connected to units, such as a motor or pump, and switches needed to operate a cleaning device such as a high-pressure washer or a vacuum deaner.

In one preferred embodiment, the fastener further comprises stopping means adapted for limiting the movement of the locking element. In this way the range of movement of the locking element is restricted to what is needed, namely the movement between the first unlocked and second locked positions, and such that the fastener cannot fall out and get lost during use and maintenance or repair of the cleaning device.

### BREIF DESCRIPTION OF THE DRAWINGS

A further understanding of the nature and advantages of the present invention may be realized by reference to the remaining portions of the specification and the drawings. In the following, preferred embodiments of the invention are explained in more detail with reference to the drawings, wherein
Fig. 1 shows a prior art cleaning device,
Fig. 2 shows an embodiment of a cleaning device according to the invention,
Fig. 3 shows a part of the working relationship of the locking element and cover and chassis,
Fig. 4 shows a partial cross section of a cleaning device, wherein the locking element is in the second locked position,
Fig. 5 shows a partial view of an embodiment of a cleaning device,
Fig. 6 shows a partial cross section of a cleaning device, wherein the locking element is in the second locked position and engages more than one protrusion,
Fig. 7 shows a preferred embodiment of a cleaning device according to the invention, and
Fig. 8 shows another preferred embodiment of a cleaning device according to the invention.

### DETAILED DESCRIPTION

The present invention will now be described more fully, hereinafter with reference to the accompanying drawings, in which exemplary embodiments of the invention are shown. The invention may, however, be embodied in different forms and should not be construed as limited to the embodiments set forth herein. Rather, these embodiments are provided so that this disclosure will be thorough and complete, and will fully convey the scope of the invention to those skilled in the art. Like reference numerals refer to like elements throughout. Like elements will, thus, not be described in detail with respect to the description of each figure.

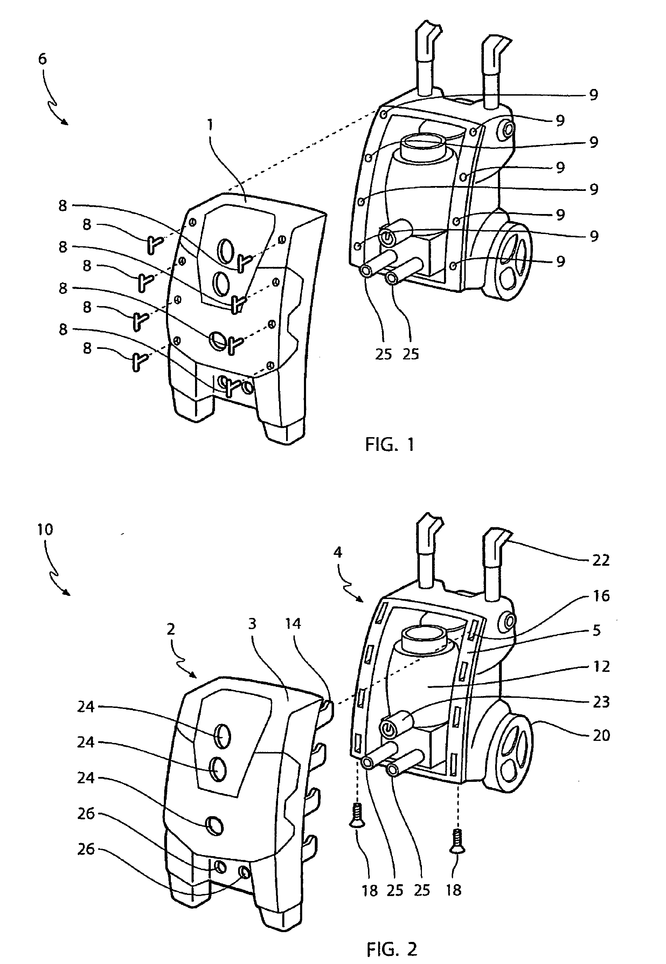

Fig. 1 shows a prior art cleaning device 6. A common way of fixing a cover 1 to a chassis 7 of a cleaning device 6 (in this illustrated example a high-pressure washer) is to use a plurality of screws 8, which are fastened by using a screw driver (not shown). The chassis 7 and cover 1 are usually made of plastics, and the screws 8 are traditionally selftapping when they are screwed into the holes 9 in the chassis 7.

The cover 1 is usually equipped with a plurality of apertures (in order to increase the intelligibility of the figure, these apertures are not shown) which need to be aligned with corresponding protruding elements on the chassis 7 or within the chassis 7. In the illustrated prior art cleaning device 6, two such protruding elements, namely the hoses 25 are illustrated. This implies that the cover 1 has to be perfectly aligned with the chassis 7, when it is attached to it, i.e. the protruding hoses 25 (and usually other protrusions that cooperate with control elements placed on the cover) preclude the possibility of having a cover 1 that can slide up and down along the chassis 7 when it is being attached.

Fig. 2 shows a cleaning device 10 comprising first cover part 2 (In the following referred to as a cover 3) and a second cover part 4. The second cover part 4 functions in the illustrated embodiment as a chassis 5, and will in the following be referred to as a chassis 5. The illustrated cleaning device 10 is a high-pressure washer. The chassis 5 is equipped with a motor 12 including a water pump (not explicitly shown). The cover 3 and chassis 5 comprise mutually cooperating protrusions 14 and recess or apertures 16. The cover 3 is adapted for being fixed to the chassis 5 by at least one separate locking element 28 (not visible), the locking element 28 being movable between a first unlocked position and a second locked position.

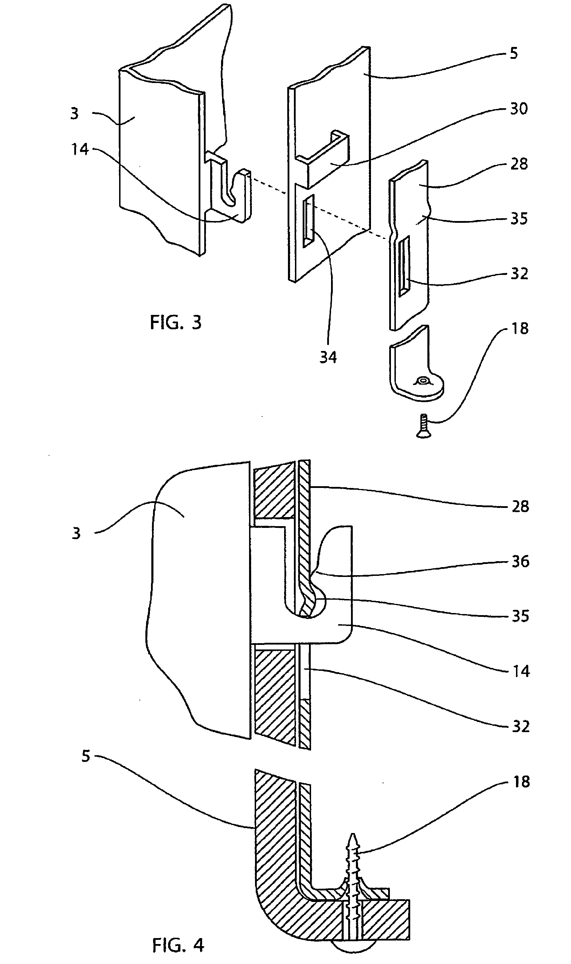

As can be seen in greater detail in Figs. 3 and 4, the locking element 28 may be fastened in its second locked position by a fastener 18.

The illustrated cleaning device 10 is equipped with two wheels 20 and a handle 22, for easier portability of the cleaning device 10.

The cover 3 is furthermore equipped with a plurality of apertures 24 for control- and indicator elemente, such as water pressure controller and water pressure indicator. The illustrated cover 3 also comprises apertures 26 for a hose. The control elements are operatively connected to the motor 12 and other units (not shown) within the cleaning device 10.

Within the chassis 5 and in association with the motor 12 there are provided a projecting water pressure indicator 23 which is adapted to fit into the aperture 24 when the cover 3 is attached to the cover 4. Furthermore, there is provided two protruding hose or pipe stubs 25 that are adapted to fit into the apertures 26 of the cover, and are preferably extending beyond the cover surface when it is attached to the chassis 5, so that there is room for attaching a hose to each or either one of the stubs 25. The provision of these protruding elements (water pressure indicator 23 and hose or pipe stubs 25) implies that the cover 3 has to be aligned perfectly with the chassis 5 when it is attached, i.e. it is not possible to slide it (the cover 3) up and down along the chassis 5.

Fig. 3 shows a part of the working relationship of the locking element 28 and cover 3 and chassis 5. The chassis 5 further comprises guiding means 30 adapted for guiding the locking element 28 when it is being moved from the first unlocked position to its second locked position. In the first unlocked position, the locking element 28 is placed in such a position relative to the chassis 5 that the aperture 32 in the locking element 28 is aligned with the aperture 34 in the chassis 5. This implies that when the cover 3 is placed on the chassis 5, the protrusion 14 will extend through the aperture 34 in the chassis 5 and the aperture 32 in the looking element 28. The protrusion 14 is substantially hook-shaped. Thus, by sliding the locking element 28 downward, it will inevitably engage the protrusion 14. This means that although the cover 3 cannot slide along the chassis 5, for the reasons explained above In relation to Fig. 1 and Fig. 2, the locking element 28 is permitted to slide along the chassis 5. The locking element 28 is preferably made from a metal, for example iron, steel, aluminium or an alloy comprising anyone of the mentioned metals. The cover 3 as well as chassis 5 is preferably made from a plastic material.

Fig. 4 shows a partial cross section of a cleaning device 6, wherein the locking element 28 is in the second locked position.

As illustrated, the locking element 28 may be fastened to the chassis 5 by a fastener 18. The fastener 18 is in a preferred embodiment a screw which has a threading that is adapted to cooperate with corresponding threading in the locking element 28, so that the locking element 28 will be moved, in a sliding movement along the chassis 5, from its first unlocked position to its second locked position by rotating the screw, for example by the aid of a screw driver. The locking element 28 may also be moved from the second locked position to the first position by rotating the screw in the opposite direction. Thus, a very simple and elegant way of fastening a cover 3 of a cleaning device to its chassis 5 is achieved.

The illustrated locking element 28 has a bulge 34 adjacent to the aperture 32. When the locking element 28 slides into the second locked position, this bulge 35 engages a corresponding bulge 36 of the substantially hook-shaped protrusion 14. Due to resilience in the material of the protrusion 14 and/or locking element 28, it will require a certain force to move the bulge 35 of the locking element past the bulge 36 of the protrusion 14 effectively providing a snap-locking relationship between the locking element 28 and the protrusion 14. Instead of the illustrated bulges 35 and 36, the same effect could be achieved by taperings.

According to one alternative embodiment of the invention, the locking element 28 is secured in its second locked position solely by this snap-locking relationship, i.e. without the illustrated fastener 18.

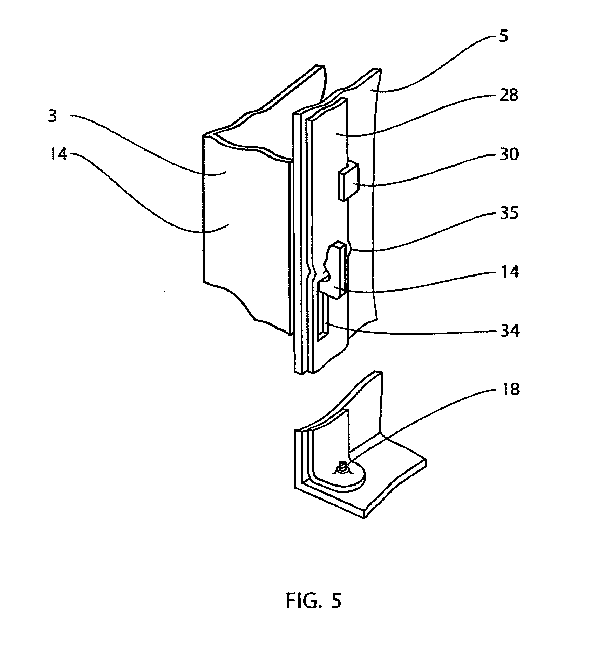

Fig. 5 shows a partial view of an embodiment of a cleaning device 10. The illustrated embodiment is similar to the ones already shown in Figs. 3 and 4. The only difference is an alternative guiding means 30 for guiding the locking element 28 when it is moved between the first unlocked and second locked position. The locking element 28 is illustrated in the first unlocked position.

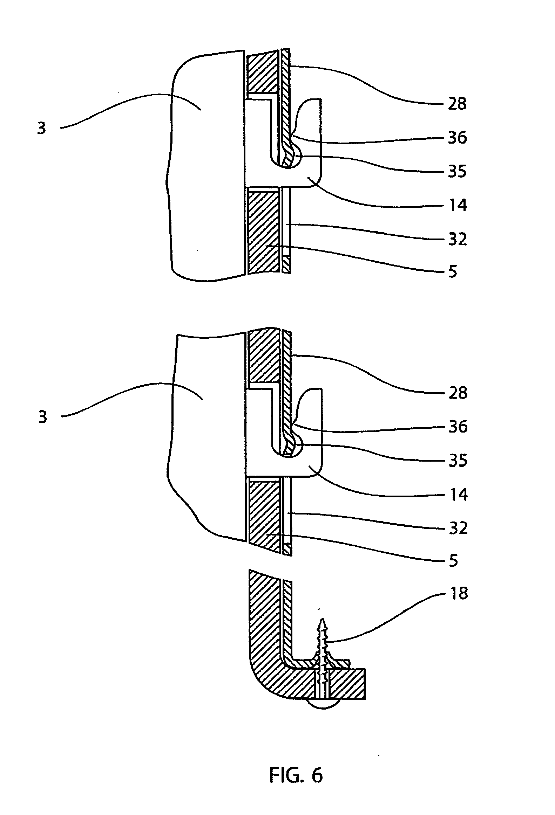

Fig. 6 shows a partial cross section of a cleaning device 10, wherein the locking element 28 is in the second locked position and engages more than one protrusion 14. The working relationship between this second protrusion 14 illustrated at the top of the figure and the locking element 28 is essentially the same as described with reference to Fig. 4. The figure is "broken", indicating that the locking element 28 is longer than illustrated, and that there may be further, not shown, protrusions 14 that engage the locking element 28. For example there may be four protrusions 14, as illustrated in Fig. 2, that engage the locking element 28.

The locking element 28 is essentially a flat elongated piece of metal, e.g. a piece of flat-iron, equipped with a number of apertures 34, or alternatively notches (not illustrated), which metal piece in one embodiment has a slightly arched or curved shape in order to accommodate to the shape of the chassis 5. It is understood that the locking element in an alternative embodiment may be formed from a plastic material.

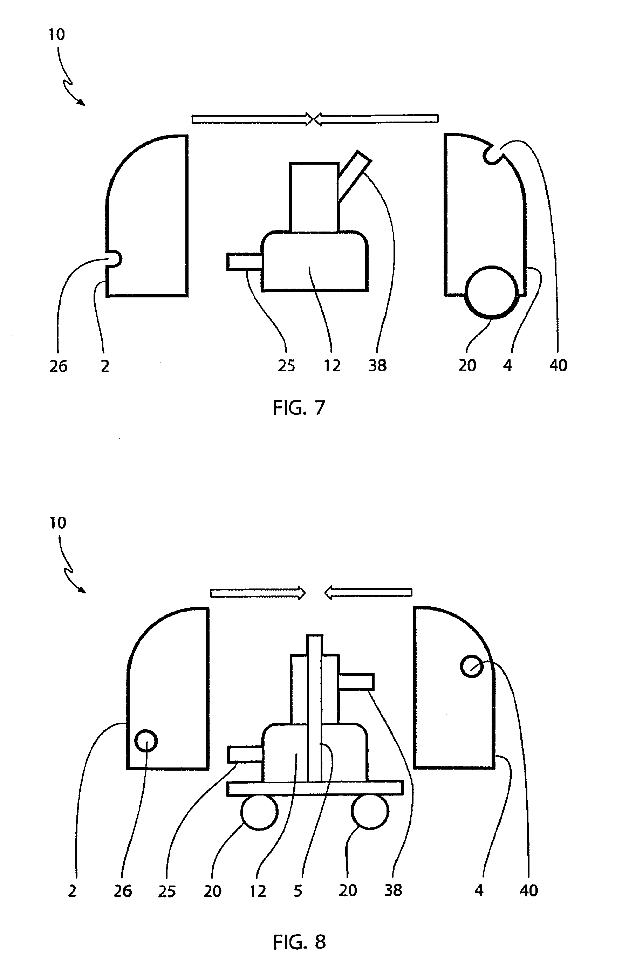

Fig. 7 shows a preferred embodiment of a cleaning device 10 according to the invention. The cleaning device 10 comprising a first cover part 2 and a second cover part 4 adapted for at least in part covering electrical and mechanical equipment such as a motor 12 of the cleaning device 10 when assembled together. The cleaning device 10 also comprises a locking element 28 (not shown) being movable between a first unlocked position and a second locked position through a sliding motion relative to the first cover part 2 and/or the second cover part 4. The locking element 28 is adapted for releasable locking engagement with one or more protrusions 14 (not shown) on the first cover part 2 and/or the second cover part 4 when it is moved into the second locked position. For simplicity, the locking element 28 and protrusions 14 are not illustrated. In the illustrated embodiment, the motor 12 is not mounted on a separated chassis before the first 2 and second cover part 4 are assembled. The first cover part has an aperture 26 adapted to receive the hose stub 25, and the second cover part 4 comprises an aperture 40 for receiving the protruding element 38. When the first 2 and second cover part 4 are assembled, they enclose the motor 12 and other electrical and mechanical equipment. Furthermore, the first 2 and second cover part 4 are preferably adapted to support the motor 12 and other electrical and mechanical equipment, when they are assembled, so in the illustrated embodiment no separate chassis is needed. It is understood that in an alternative embodiment, either the first 2 or the second cover part 4 may function as a chassis or comprise a chassis, whereupon the motor 12 and other electrical and mechanical equipment could be mounted and fixed before assembling/fixing the first 2 and second cover part 4 to each other.

Fig. 8 shows another embodiment of a cleaning device 10 according to the invention. The cleaning device 10 comprises a first cover part 2 and a second cover part 4 adapted for at least in part covering electrical and mechanical equipment, such as a motor 12 of the cleaning device 10 when assembled together. The cleaning device 10 also comprises a locking element 28 (not shown) being movable between a first unlocked position and a second locked position through a sliding motion relative to the first cover part 2 and/or the second cover part 4. The locking element 28 being adapted for releasable locking engagement with one or more protrusions 14 (not shown) on the first cover part 2 and/or the second cover part 4, when it is moved into the second locked position. For simplicity, the locking element 28 and protrusions 14 are not illustrated. In the illustrated embodiment, the motor 12 is mounted on a separated chassis 5 before the first 2 and second cover part 4 are assembled. In a preferred embodiment, the locking element 28 is placed in the chassis 5, however, it could alternatively also be placed in the first cover part 2 or the second cover part. In the illustrated embodiment, the first cover part 2 and second cover part 4 are preferably made of plastic, and the chassis is preferably made of metal and/or plastic.

It is furthermore understood that any feature illustrated in any of the Figs. 1 - 8 and any feature described with reference to any of the embodiments may form part of any other embodiment illustrated in any of the Figs. 1 - 8 or any of the other embodiments described herein if that particular feature is compatible with said other embodiment.

### LIST OF REFERENCES

In the following is given a list of reference numbers that are used in the detailed description of the invention.
- 1: cover of prior art cleaning device
- 2: first cover part
- 3: cover
- 4: second cover part
- 5: chassis
- 6: prior art cleaning device
- 7: chassis of prior art cleaning device
- 8: screws
- 10: cleaning device
- 12: motor
- 14: protrusions
- 16: apertures of the chassis
- 18: fastener
- 20: wheel
- 22: handle
- 23: water pressure indicator
- 24: apertures in the cover for a hose
- 25: protruding hose stub
- 26: apertures in the cover for control elements
- 28: separate locking element
- 30: guiding means
- 32: aperture in the locking element
- 34: aperture in the chassis
- 35: bulge in the locking element
- 36: bulge in the protrusion
- 38: protruding element
- 40: aperture in the second cover part

## Claims

1. A cleaning device (10), comprising a first cover part (2) and a second cover part (4) adapted for at least in part covering electrical and mechanical equipment of the cleaning device (10) when assembled together, **characterized in that** a locking element (28) being movable between a first unlocked position and a second locked position through a sliding motion relative to the first cover part (2) and/or the second cover part (4), the locking element (28) being adapted for releasable locking engagement with one or more protrusions (14) on the first cover part (2) and/or the second cover part (4), when it is moved into the second locked position.

2. A cleaning device (10) according to claim 1, wherein the first cover part (2) and/or the second cover part (4) comprises one or more recesses or apertures (34) adapted for mutually cooperating with the one or more protrusions (14).

3. A cleaning device (10) according to claim 1 or 2, wherein the first cover part (2) or the second cover part (4) comprises a chassis (5).

4. A cleaning device (10) according to claim 1, 2 or 3, wherein the locking element (28) is not visible when the first cover part (2) is fixed to the second cover part (4) from outside of the cleaning device (10).

5. A cleaning device (10) according to any of the preceding claims, wherein the one or more protrusions (14) are substantially hook-shaped.

6. A cleaning device (10) according to any of the preceding claims, further comprising packing means placed between the first cover part (2) and the second cover part (4) for providing an air- and/or waterproof seal.

7. A cleaning device (10) according to any of the preceding claims, wherein the one or more protrusions (14) are adapted to cooperate with corresponding one or more apertures (32) or notches in the locking element (28).

8. A cleaning device (10) according to any of the claims 1 - 6, wherein the one or more protrusions (14) are placed on the first cover part (2), said protrusions (14) being adapted for cooperating with corresponding apertures (34) in the second cover part (4) and corresponding apertures (32) in the locking element (28).

9. A cleaning device (10) according to any of the preceding claims, wherein the first cover part (2) or the second cover part (4) further comprises guiding means (30) adapted for guiding the locking element (28) when it is being moved from the first unlocked position to its second locked position.

10. A cleaning device (10) according to any of the preceding claims, wherein the locking element (28) is fixed in its second position by a fastener (18).

11. A cleaning device (10) according to claim 10, wherein the fastener (18) comprises a threading, and wherein the fastener (18) is adapted to cooperate with the locking element (28) in such a way that it is movable from the first unlocked position to the second locked position by rotating the fastener (18) in relation to its longitudinal axis.

12. A cleaning device (10) according to any of the preceding claims, wherein the first cover part (2) and/or the second cover part (4) comprises a plurality of apertures (24, 26) for control elements and/or a hose cooperating with projections connected to the electrical and/or mechanical equipment within the cover parts (2, 4).

13. A cleaning device (10) according to claim 10 or 11, wherein the fastener (18) further comprises stopping means adapted for limiting the movement of the locking element (28).

## Patentansprüche

1. Reinigungsvorrichtung (10) umfassend einen ersten Abdeckungsteil (2) und einen zweiten Abdeckungsteil (4), die so ausgelegt sind, dass sie mindestens teilweise die elektrische und mechanische Ausrüstung der Reinigungsvorrichtung (10) abzudecken, wenn sie zusammengefügt sind, **dadurch gekennzeichnet, dass** ein Verriegelungselement (28) durch eine gleitende Bewegung bezüglich des ersten Abdeckungsteils (2) und/oder des zweiten Abdeckungsteils (4) zwischen einer ersten entriegelten Stellung und einer zweiten verriegelten Stellung bewegbar ist, wobei das Verriegelungselement (28) für lösbaren Verriegelungseingriff mit einem oder mehreren Vorsprüngen (14) am ersten Abdeckungsteil (2) und/oder am zweiten Abdeckungsteil (4) ausgelegt ist, wenn es in die zweite verriegelte Stellung bewegt wird.

2. Reinigungsvorrichtung (10) nach Anspruch 1, wobei der erste Abdeckungsteil (2) und/oder der zweite Abdeckungsteil (4) eine oder mehrere Ausnehmungen oder Öffnungen (34) umfasst, die so ausgelegt sind, dass sie gegenseitig mit dem einen oder mehreren Vorsprüngen (14) zusammenwirken.

3. Reinigungsvorrichtung (10) nach Anspruch 1 oder 2, wobei der erste Abdeckungsteil (2) oder der zweite Abdeckungsteil (4) ein Chassis (5) umfasst.

4. Reinigungsvorrichtung (10) nach Anspruch 1, 2 oder 3, wobei das Verriegelungselement (28) nicht sichtbar ist, wenn der erste Abdeckungsteil (2) am zweiten Abdeckungsteil (4) befestigt ist, von außerhalb der Reinigungsvorrichtung (10).

5. Reinigungsvorrichtung (10) nach einem der vorhergehenden Ansprüche, wobei der eine oder mehrere Vorsprünge (14) im Wesentlichen hakenförmig sind.

6. Reinigungsvorrichtung (10) nach einem der vorhergehenden Ansprüche, ferner umfassend Dichtungsmittel, die zwischen dem ersten Abdeckungsteil (2) und dem zweiten Abdeckungsteil (4) angeordnet sind, um eine luft- und/oder wasserdichte Dichtung bereitzustellen.

7. Reinigungsvorrichtung (10) nach einem der vorhergehenden Ansprüchen, wobei der eine oder mehrere Vorsprünge (14) so ausgelegt sind, dass sie mit der entsprechenden einen oder mehreren Öffnungen (32) oder Kerben im Verriegelungselement (28) zusammenwirken.

8. Reinigungsvorrichtung (10) nach einem der Ansprüche 1-6, wobei der eine oder mehrere Vorsprünge (14) am ersten Abdeckungsteil (2) angeordnet sind, wobei die Vorsprünge (14) so ausgelegt sind, dass sie mit entsprechenden Öffnungen (34) im zweiten Abdeckungsteil (4) und entsprechenden Öffnungen (32) im Verriegelungselement (28) zusammenwirken.

9. Reinigungsvorrichtung (10) nach einem der vorhergehenden Ansprüche, wobei der erste Abdeckungsteil (2) oder der zweite Abdeckungsteil (4) ferner Führungselemente (30) umfasst, die für das Führen des Verriegelungselementes (28) ausgelegt sind, wenn es von der ersten entriegelten Position in seine zweite verriegelte Position bewegt wird.

10. Reinigungsvorrichtung (10) nach einem der vorhergehenden Ansprüche, wobei das Verriegelungselement (28) in seiner zweiten Position durch ein Befestigungselement (18) fixiert ist.

11. Reinigungsvorrichtung (10) nach Anspruch 10, wobei das Befestigungselement (18) ein Gewinde umfasst, und wobei das Befestigungselement (18) so ausgelegt ist, dass es mit dem Verriegelungselement (28) auf eine solche Weise zusammenwirkt, dass es durch Drehen des Befestigungsmittels (18) bezogen auf seine Längsachse von der ersten entriegelten Stellung in die zweite verriegelte Stellung bewegbar ist.

12. Reinigungsvorrichtung (10) nach einem der vorhergehenden Ansprüche, wobei der erste Abdeckungsteil (2) und/oder der zweite Abdeckungsteil (4) eine Vielzahl von Öffnungen (24, 26) für Steuerelemente und/oder einen Schlauch umfasst, die mit Vorsprüngen zusammenwirken, welche mit der elektrischen und/oder mechanischen Ausrüstung innerhalb der Abdeckungsteile (2, 4) verbunden sind.

13. Reinigungsvorrichtung (10) nach Anspruch 10 oder 11, wobei das Befestigungselement (18) ferner Stoppmittel umfasst, die für das Beschränken der Bewegung des Verriegelungselementes (28) ausgelegt sind.

## Revendications

1. Dispositif de nettoyage (10), comprenant une première partie de couverture (2) et une deuxième partie de couverture (4) adaptées pour couvrir, au moins partiellement, de l'équipement électrique et mécanique du dispositif de nettoyage (10) lorsque celui-ci est assemblé, **caractérisé en ce qu'**un élément de verrouillage (28) étant mobile entre une première position déverrouillée et une deuxième position verrouillée pars un mouvement glissant relatif à la première partie de couverture (2) et/ou la deuxième partie de couverture (4), l'élément de verrouillage (28) étant adapté pour s'engrener en verrouillage, de manière débrayable, avec au moins une saillie (14) sur la première partie de couverture (2) et/ou la deuxième partie de couverture (4), lorsqu'il est déplacé dans la deuxième position de verrouillage.

2. Dispositif de nettoyage (10) selon la revendication 1, dans lequel la première partie de couverture (2) et/ou la deuxième partie de couverture (4) comprend au moins une rainure ou ouverture (34) adaptée pour coopérer mutuellement avec la saillie ou les saillies, du nombre d'au moins une (14).

3. Dispositif de nettoyage (10) selon l'une des revendications 1 ou 2, dans lequel la première partie de couverture (2) ou la deuxième partie de couverture (4) comprend un châssis (5).

4. Dispositif de nettoyage (10) selon l'une des revendications 1, 2 ou 3, dans lequel l'élément de verrouillage (28) n'est pas visible lorsque la première partie de couverture (2) est fixée à la deuxième partie de couverture (4) à partir de l'extérieur du dispositif de nettoyage (10).

5. Dispositif de nettoyage (10) selon l'une quelconque des revendications précédentes, dans lequel la saillie ou les saillies, du nombre d'au moins une (14), a/ont substantiellement la forme d'un crochet.

6. Dispositif de nettoyage (10) selon l'une quelconque des revendications précédentes, comprenant en outre des moyens d'emballage placés entre la première partie de couverture (2) et la deuxième partie de couverture (4) pour fournir un joint d'étanchéité imperméable à l'air et/ou à l'eau.

7. Dispositif de nettoyage (10) selon l'une quelconque des revendications précédentes, dans lequel la saillie ou les saillies, du nombre d'au moins une (14), est adaptée/sont adaptées pour coopérer avec au moins une ouverture ou une encoche correspondante (32) dans l'élément de verrouillage (28).

8. Dispositif de nettoyage (10) selon l'une quelconque des revendications 1 à 6, dans lequel la saillie ou les saillies, du nombre d'au moins une (14), est placée/sont placées sur la première partie de couverture (2), lesdites saillies (14) étant adaptées pour coopérer avec des ouvertures correspondantes (34) dans la deuxième partie de couverture (4) et des ouvertures correspondantes (32) dans l'élément de verrouillage (28).

9. Dispositif de nettoyage (10) selon l'une quelconque des revendications précédentes, dans lequel la première partie de couverture (2) ou la deuxième partie de couverture (4) comprend en outre des moyens de guidage (30) adaptés pour guider l'élément de verrouillage (28) lorsqu'il est déplacé de la première position déverrouillée à sa deuxième position verrouillée.

10. Dispositif de nettoyage (10) selon l'une quelconque des revendications précédentes, dans lequel l'élément de verrouillage (28) est fixé dans sa deuxième position par un fixateur (18).

11. Dispositif de nettoyage (10) selon la revendication 10, dans lequel le fixateur (18) comprend un filetage, et dans lequel le fixateur (18) est adapté pour coopérer avec l'élément de verrouillage (28) d'une telle manière qu'il est déplaçable de la première position déverrouillée à la deuxième position verrouillée en tournant le fixateur (18) par rapport à son axe longitudinale.

12. Dispositif de nettoyage (10) selon l'une quelconque des revendications précédentes, dans lequel la première partie de couverture (2) et/ou la deuxième partie de couverture (4) comprend une pluralité d'ouvertures (24,26) pour des éléments de contrôle et/ou un tuyau flexible qui coopère avec des projections reliées à l'équipement électrique et/ou mécanique à l'intérieur des parties de couvertures (2, 4).

13. Dispositif de nettoyage (10) selon l'une des revendications 10 ou 11, dans lequel le fixateur (18) comprend en outre des moyens d'arrêt adaptés pour limiter le mouvement de l'élément de verrouillage (28).
